# EUROPEAN PATENT APPLICATION

(11) **EP 4 257 732 A1**
(43) Date of publication of application: **11.10.2023**
(21) Application number: 21903408.9
(22) Date of filing: 07.12.2021
(51) Int. Cl.: C25B 15/02, C25B 1/04, C25B 9/00, C25B 15/00, C25B 15/08

(54) **ALKALINE WATER ELECTROLYSIS SYSTEM, AND METHOD FOR OPERATING ALKALINE WATER ELECTROLYSIS SYSTEM**

(30) Priority: 07.12.2020 JP 2020203019
(71) Applicant: Asahi Kasei Kabushiki Kaisha, Tokyo 1000006 (JP)
(72) Inventor: UCHINO Yousuke, Tokyo 100-0006 (JP); OHNO Jun, Tokyo 100-0006 (JP)
(74) Representative: dompatent von Kreisler Selting Werner - Partnerschaft von Patent- und Rechtsanwälten mbB
(86) International application number: PCT/JP2021/044970
(87) International publication number: WO 2022/124309

(57) **Abstract**

An alkaline water electrolysis system (70) includes a rectifier (74) that is connected to a fluctuating power source and converts an AC power to a DC power; a plurality of bipolar electrolyzers (50_1) to (50_N) that generate hydrogen and oxygen through electrolysis of water using an electrolytic solution based on a predetermined DC voltage supplied from the rectifier 74; gas-liquid separation tanks (72) that are connected to the plurality of bipolar electrolyzers (50_1) to (50_N), and separate the hydrogen and the oxygen from the electrolytic solution and store the electrolytic solution; and open/close valves (62) provided between the gas-liquid separation tanks (72) and the bipolar electrolyzers (50).

## Description

### TECHNICAL FIELD

The present disclosure relates to an alkaline water electrolysis system and a method of operating an alkaline water electrolysis system.

### BACKGROUND

In recent years, techniques utilizing renewable energy, such as wind power generation and solar power generation, have attracted attention in order to address the issues including global warming due to greenhouse gases such as carbon dioxide, decrease of fossil fuel reserves, and so on.

Renewable energy is highly variable dependent on climatic conditions. Therefore, it is difficult to transport power generated on the basis of renewable energy to a general power system, which leads to concerns about social impacts such as imbalance between supply and demand of power and instability in the power system. To address this, studies have been conducted to store electric power and use it after being converted into a transportable form. For example, researches have been conducted to generate hydrogen through electrolysis of water (electrolysis) and to use hydrogen as an energy source or a raw material.

Hydrogen is widely used industrially in the fields of, for example, petroleum refining, chemical synthesis, and metal refining, and in recent years it can be used in many scenes such as in hydrogen stations for fuel cell vehicles, smart communities, and hydrogen power plants. Accordingly, there is high expectation for the development of technology to obtain, in particular, hydrogen from renewable energy.

The solid polymer membrane water electrolysis, high-temperature steam electrolysis, and alkaline water electrolysis have been known as water electrolysis methods. The alkaline water electrolysis is considered to be one of the most promising method because it has been industrialized for more than several decades, can be operated in a large scale, and is inexpensive compared to other electrolysis methods. The alkaline water electrolysis is an electrolysis method that generates hydrogen gas from a cathode and oxygen gas from an anode through electrolysis of water using an alkaline solution (alkaline water) in which an alkali salt is dissolved as the electrolytic solution.

For example, PTL 1 discloses a hydrogen production facility with improved energy efficiency comprising a water electrolysis apparatus in which a plurality of cell stacks are electrically connected in series or parallel to each other, power supply means for supplying power to the water electrolysis apparatus, a voltage control unit for variably controlling the voltage to be supplied to the water electrolysis apparatus, and a stack number control unit for selecting the number of cell stacks used so that the voltage and the current acting on the cell stacks satisfy predetermined ranges.

For example, PTL 2 discloses a hydrogen production system comprising a power generation apparatus that converts renewable energy into electrical energy, a plurality of hydrogen production apparatuses that are connected in series or parallel to each other to produce hydrogen gas using the electrical energy, a switching element that switches the connection configuration of the plurality of hydrogen production apparatuses, voltage application means that applies voltage to the hydrogen production apparatuses, and a controller that controls the switching element and the voltage application means, so that occurrence of reverse reactions in hydrogen production apparatuses is inhibited.

### CITATION LIST

### Patent Literature

PTL 1: JP 2005-126792 A
PTL 2: WO 2013/046958 A1

### SUMMARY

### (Technical Problem)

However, conventional systems having multiple electrolyzers have the problem of frequent purging of an inert gas when the entire system is shut down. Hence, there has been a problem that maintaining the sustainability of supply of high-purity hydrogen is difficult.

In view of such a circumstance, an object of the present disclosure is to provide an alkaline water electrolysis system that is capable of continuously producing high-purity hydrogen, and a method of operating an alkaline water electrolysis system.

### (Solution to Problem)

Specifically, the present disclosure is as follows:
An alkaline water electrolysis system according to one embodiment comprises:
a rectifier that is connected to a fluctuating power source and converts an AC power to a DC power;
a plurality of bipolar electrolyzers that generate hydrogen and oxygen through electrolysis of water using an electrolytic solution based on a predetermined DC voltage supplied from the rectifier;
gas-liquid separation tanks that are connected to the plurality of bipolar electrolyzers, and separate the hydrogen and the oxygen from the electrolytic solution and store the electrolytic solution; and
open/close valves provided between the gas-liquid separation tanks and the bipolar electrolyzers.
Furthermore, the alkaline water electrolysis system according to one embodiment further comprises a pressure control valve that adjusts an internal pressure of the gas-liquid separation tanks.
Furthermore, the alkaline water electrolysis system of one embodiment further comprises a control unit that determines the DC voltage and controls the bipolar electrolyzers to be operated or stopped.

Furthermore, in the alkaline water electrolysis system of one embodiment, the control unit
controls the bipolar electrolyzers to be operated or stopped so that a current to operate the alkaline water electrolysis system coincides with a target current.

Furthermore, in the alkaline water electrolysis system of one embodiment, the control unit
controls the bipolar electrolyzers to be operated or stopped based on a ratio of a current density of operating bipolar electrolyzers to a maximum current density.

Furthermore, in the alkaline water electrolysis system of one embodiment, the control unit:
operates all of the bipolar electrolyzers when a power supplied to the alkaline water electrolysis system is equal to or more than a first threshold, and
operates a part of the bipolar electrolyzers when the power supplied to the alkaline water electrolysis system is less than the first threshold.

Furthermore, in the alkaline water electrolysis system of one embodiment, the control unit,
when the power is supplied to the alkaline water electrolysis system:
increases a number of bipolar electrolyzers being operated when a current density of a bipolar electrolyzer that has started operating is equal to or more than a second threshold, and
maintains the number of the bipolar electrolyzers being operated when the current density of the bipolar electrolyzer that has started operating is less than the second threshold.

Furthermore, the alkaline water electrolysis system according to one embodiment further comprises a heating device that heats the electrolytic solution stored inside the gas-liquid separation tanks.

Furthermore, in one embodiment of the alkaline water electrolysis system, renewable energy supplied to the alkaline water electrolysis system is
an energy derived from at least one of winds, solar light, hydraulic energy, tides, waves, ocean currents, and heat of the earth.

Furthermore, in the alkaline water electrolysis system of one embodiment, the rectifier is provided to each of the plurality of bipolar electrolyzers.

A method of operating an alkaline water electrolysis system according to one embodiment comprises the steps of:
converting an AC power to a DC power by a rectifier connected to a fluctuating power source;
generating, by a plurality of bipolar electrolyzers, hydrogen and oxygen through electrolysis of water using an electrolytic solution based on a predetermined DC voltage supplied from the rectifier;
separating the hydrogen and the oxygen from the electrolytic solution and storing the electrolytic solution in gas-liquid separation tanks connected to the plurality of bipolar electrolyzers; and
inhibiting, by open/close valves provided between the gas-liquid separation tanks and the bipolar electrolyzers, passages of the electrolytic solution, the hydrogen, and the oxygen between the gas-liquid separation tanks and the bipolar electrolyzers.

Furthermore, the method of operating an alkaline water electrolysis system according to one embodiment further comprises, by a control unit, the step of controlling the bipolar electrolyzers to be operated or stopped and closing an inlet open/close valve in the open/close valves and an outlet open/close valve in the open/close valves or the steps of closing one of the inlet open/close valve or the outlet open/close valve.

Furthermore, the method of operating the alkaline water electrolysis system according to one embodiment further comprising, by the control unit, the step of closing the inlet open/close valve and the outlet open/close valve, or closing one of the inlet open/close valve or the outlet open/close valve, when an inside of a bipolar electrolyzer is filled with the electrolytic solution.

Furthermore, the method of operating an alkaline water electrolysis system according to one embodiment further comprises the step of adjusting a temperature of the electrolytic solution by a heat exchanger provided inside the gas-liquid separation tanks.

Furthermore, in one embodiment of the method of operating an alkaline water electrolysis system, the gas-liquid separation tanks are provided at an upper portion of the plurality of the bipolar electrolyzers.

### (Advantageous Effect)

According to the present disclosure, an alkaline water electrolysis system that is capable of continuously producing high-purity hydrogen and a method of operating an alkaline water electrolysis system can be provided.

### BRIEF DESCRIPTION OF THE DRAWINGS

[FIG. 1A] is a diagram illustrating one example of the configuration of an alkaline water electrolysis system according to the present embodiment.
[FIG. 1B] is a diagram illustrating one example of the configuration of an alkaline water electrolysis system according to the present embodiment.
[FIG. 2] is a diagram illustrating one example of a mechanism for maintaining a high purity gas according to the present embodiment.
[FIG. 3A] is a diagram illustrating one example of the relationship between the current load and the concentration of impurities in the case where all of the bipolar electrolyzers are operated in the alkaline water electrolysis system according to the present embodiment.
[FIG. 3B] is a diagram illustrating one example of the relationship between the current load and the concentration of impurities in the case where some of the bipolar electrolyzers are operated and some of the bipolar electrolyzers are stopped in an alkaline water electrolysis system according to the present embodiment.
[FIG. 4] is a diagram illustrating one example of the configuration of a bipolar electrolyzer according to the present embodiment.
[FIG. 5A] is a diagram illustrating one example of the configuration of an electrolytic cell according to the present embodiment.
[FIG. 5B] is a diagram illustrating one example of the configuration of an electrolytic cell according to the present embodiment.
[FIG. 6] is a flowchart illustrating one example of the method of operating an alkaline water electrolysis system according to the present embodiment.

### DETAILED DESCRIPTION

One embodiment of the present disclosure will be described in detail with reference to the drawings. Note that, in principle, the same components are denoted by like reference numbers, and redundant explanations are omitted. In each figure, the ratio of the length and the width of each element is exaggerated from the actual ratio for convenience of explanation.

In the following explanation, the term "vertical" shall mean the direction parallel to the Z-axis of the coordinate axis representation depicted in the drawings, the term "upper" shall mean the positive direction in the Z-axis concerned, and the term "lower" shall mean the negative direction in the Z-axis concerned. The term "horizontal" shall mean the direction parallel to the XY plane of the coordinate axis representation drawn on the drawings. The term "oblique" shall mean a direction that forms a predetermined angle (angles other than 0°, 90°, 180°, and 270°) with respect to the XY plane of the coordinate axis representation drawn on the drawings. The term "left" shall mean the negative direction in the X axis of the coordinate axis display depicted in the drawing, and "right" shall mean the positive direction in the X axis of the coordinate axis display depicted in the drawing. However, the terms "vertical", "horizontal", "oblique", "upper", "lower", "right", and "left" are merely defined for convenience and shall not be interpreted in a restrictive manner.

### <Configuration of alkaline water electrolysis system>

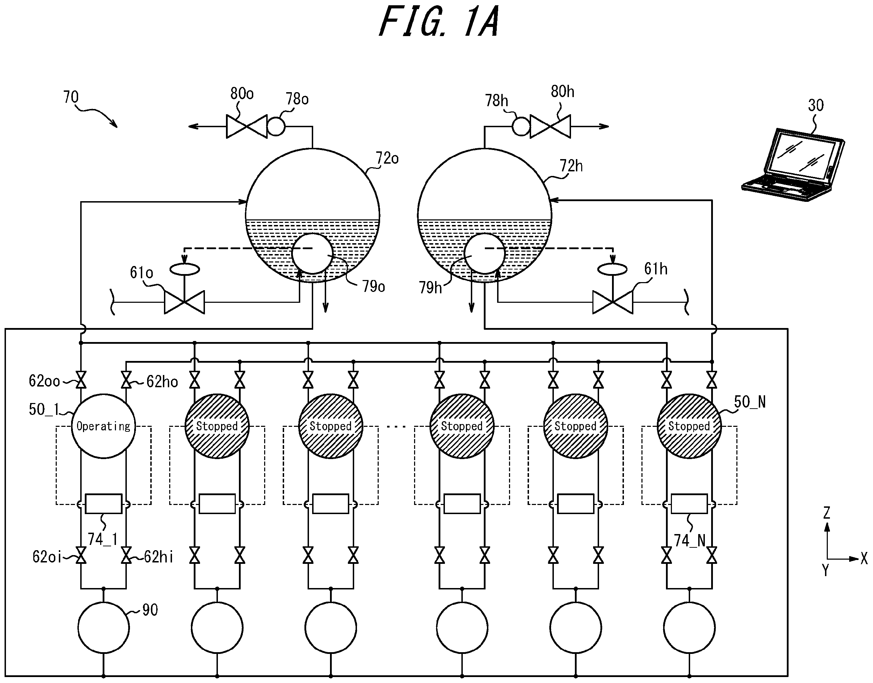

Referring to FIGS. 1A to 5B, one example configuration of an alkaline water electrolysis system 70 according to the present embodiment is described.

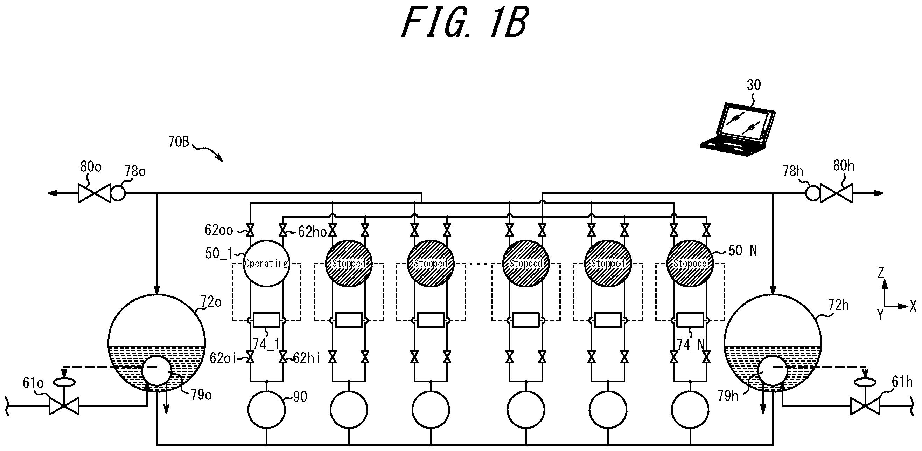

The alkaline water electrolysis system 70 includes a plurality of rectifiers 74_1 to 74_N, a plurality of bipolar electrolyzers 50_1 to 50_N, open/close valves 62, gas-liquid separation tanks 72, heat exchangers 79, a control unit 30, temperature control valves 61, pressure gauges 78, pressure control valves 80, and circulation pumps 90. In FIGS. 1A and 1B, a configuration in which the plurality of bipolar electrolyzers is connected to respective rectifiers is depicted as one example, but a plurality of bipolar electrolyzers may be connected to the same rectifier. In addition, the number of multiple bipolar electrolyzers is not limited.

### [Rectifier]

The plurality of rectifiers 74_1 to 74_N are electrically connected to the respectively plurality of bipolar electrolyzers 50_1 to 50_N. In addition, the plurality of rectifiers 74_1 to 74_N are electrically connected to the control unit 30.

A rectifier 74 is connected to a fluctuating power source and converts an AC power to a DC power when fluctuating power (e.g., renewable energy) is supplied from outside the alkaline water electrolysis system 70. Renewable energy is, for example, an energy derived from at least one of winds, solar light, hydraulic energy, tides, waves, ocean currents, and heat of the earth. Because renewable energy is prone to power fluctuations, power may be randomly supplied to the alkaline water electrolysis system 70 over a wide range of current densities from low to high.

The rectifier 74 applies a predetermined DC current between the anode terminal and the cathode terminal in a bipolar electrolyzer 50. The predetermined DC voltage is determined by the control unit 30.

For example, the rectifier 74 causes a current to flow between the anode terminal and the cathode terminal in the bipolar electrolyzer 50 at a current density of 10 [kA/m²] that is determined by the control unit 30. As a result, the bipolar electrolyzer 50 operates at an operation rate of 100%.

For example, the rectifier 74 causes a current to flow between the anode terminal and the cathode terminal in the bipolar electrolyzer 50 at a current density of 5 [kA/m²] that is determined by the control unit 30. As a result, the bipolar electrolyzer 50 operates at an operation rate of 50%.

For example, the rectifier 74 causes a current to flow between the anode terminal and the cathode terminal in the bipolar electrolyzer 50 at a current density of 3 [kA/m²] that is determined by the control unit 30. As a result, the bipolar electrolyzer 50 operates at an operation rate of 30%.

For example, the rectifier 74 does not apply voltage across the anode terminal and the cathode terminal in the bipolar electrolyzer 50. As a result, the bipolar electrolyzer 50 is stopped.

As described above, the rectifier 74 applies the predetermined DC voltage determined by the control unit 30 across the anode terminal and the cathode terminal in the bipolar electrolyzer 50, so that the bipolar electrolyzers 50 are controlled to be operated or stopped. In this specification, the bipolar electrolyzers 50 are controlled to be operated or stopped shall not only mean simple ON or OFF controls on the bipolar electrolyzers 50, but shall also include controls on the operation rates of the bipolar electrolyzers 50 when they are operated.

### [Bipolar electrolyzer]

The plurality of bipolar electrolyzers 50_1 to 50_N are provided at the lower portion of the gas-liquid separation tanks 72 and are electrically connected to the plurality of rectifiers 74_1 to 74_N. Furthermore, the plurality of bipolar electrolyzers 50_1 to 50_N are connected to an oxygen separation tank 72o via open/close valves 62o (inlet open/close valve 62oi and outlet open/close valve 62oo), and are connected to a hydrogen separation tank 72h via open/close valves 62h (inlet open/close valve 62hi and outlet open/close valve 62ho).

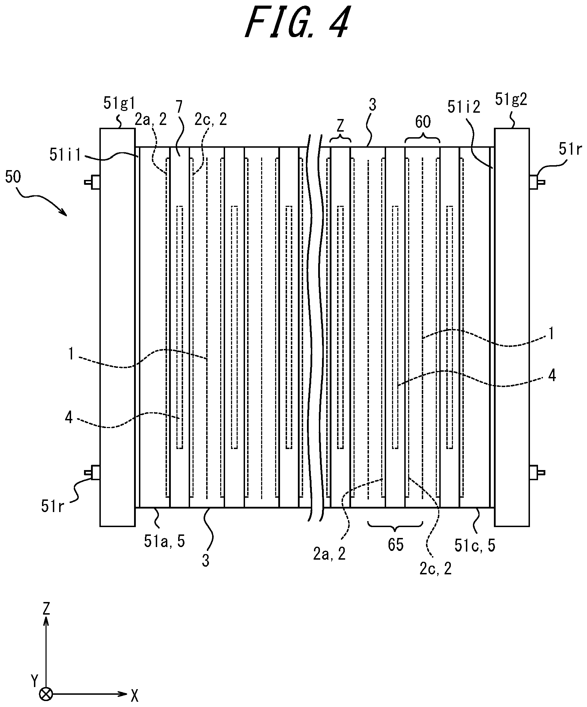

The bipolar electrolyzers 50 generate oxygen from the anode side and hydrogen from the cathode side through electrolysis of water using an electrolytic solution based on the predetermined DC voltage supplied from the rectifiers 74. A bipolar electrolyzer 50 includes a plurality of electrolytic cells 65 (see FIG. 4). Note that the details of the configuration of the bipolar electrolyzers 50 and the electrolytic cells 65 are described below.

The electrolytic solution is an alkaline water solution containing an alkali salt dissolved therein, and examples thereof include a water solution of NaOH and a water solution of KOH. The concentration of the alkali salt in the electrolytic solution is preferably 20 mass% to 50 mass% and is more preferably 25 mass% to 40 mass%. The electrolytic solution is particularly preferably a water solution of KOH with an alkali salt concentration of 25 to 40 mass% or a water solution of NaOH with an alkali salt concentration of 10 to 40 mass%, in view of ionic conductivity, kinematic viscosity, freezing at cold temperatures, and the like.

The plurality of bipolar electrolyzers 50_1 to 50_N are controlled to be operated or stopped by the control unit 30. For example, each of the plurality of bipolar electrolyzers 50_1 to 50_N are controlled to be operated or stopped by the control unit 30 so that the current to operate the alkaline water electrolysis system 70 coincides with a target current. For example, each of the plurality of bipolar electrolyzers 50_1 to 50_N are controlled to be operated or stopped by the control unit 30 based on the ratio of the current density of operating bipolar electrolyzer(s) being operated to the maximum current density. For example, each of the plurality of bipolar electrolyzers 50_1 to 50_N are controlled to be operated or stopped by the control unit 30 based on the power supplied to the alkaline water electrolysis system 70.

In this way, the control unit 30 appropriately controls each of the plurality of bipolar electrolyzers 50_1 to 50_N to be operated or stopped, so that the alkaline water electrolysis system 70 can continuously produce high-purity hydrogen.

### [Open/close valve]

The open/close valves 62 are provided between the bipolar electrolyzers 50 and the gas-liquid separation tanks 72. For example, an open/close valves 62o are provided between the bipolar electrolyzers 50 and the oxygen separation tank 72o. For example, an open/close valves 62h are provided between the bipolar electrolyzers 50 and the hydrogen separation tank 72h. For example, an inlet open/close valve 62oi is provided between a bipolar electrolyzer 50 and the gas-liquid separation tank 72o via the circulation pumps 90. For example, an inlet open/close valve 62hi is provided between a bipolar electrolyzer 50 and the gas-liquid separation tank 72h via the circulation pumps 90.

An open/close valves 62 are controlled to opened or closed by the control unit 30. When an open/close valve 62 is opened, the electrolytic solution flows between the bipolar electrolyzer 50 and the gas-liquid separation tank 72. When the open/close valve 62 is closed, flowing of the electrolytic solution is stopped between the bipolar electrolyzer 50 and the gas-liquid separation tank 72. When an open/close valve 62 is closed, not only is the electrolytic solution is inhibited from flowing between the bipolar electrolyzer 50 and the gas-liquid separation tank 72, but the closure of the open/close valve 62 also prevents gas from diffusing between the bipolar electrolyzer 50 and the gas-liquid separation tank 72, which prevents the gas from entering the inside of the bipolar electrolyzer. As a result, contamination or the like of the gas can also be reduced.

An open/close valve 62 is closed when the inside of the bipolar electrolyzer 50 is filled with the electrolytic solution. As a result, the membrane inside the bipolar electrolyzer 50 is constantly immersed in the electrolytic solution, and gas diffusion of oxygen gas and hydrogen gas that have entered inside the bipolar electrolyzer 50 through the membrane can be inhibited. As a result, gas contamination or the like can be further reduced.

The inlet open/close valves 62hi and 62oi are particularly effective in preventing transfer of the electrolytic solution to the gas-liquid separation tanks 72 by means of the weight thereof, which is effective for keeping the bipolar electrolyzer 50 to be constantly filled and the diaphragm constantly immersed in the electrolytic solution. The outlet open/close valves 62ho and 62oo are particularly effective in preventing diffusion of hydrogen gas and oxygen gas in the piping. The effects are maximized by closing all of the inlet open/close valves 62hi, 62oi and the outlet open/close valves 62ho, 62oo, but the effects are obtained even when only the inlet open/close valves 62hi, 62oi are closed, or when only the outlet open/close valves 62ho, 62oo are closed.

The circulation pumps 90 pump the electrolytic solution to a dipolar electrolyzer 50. Operating the circulation pumps has effects of not only filling the dipolar electrolyzers 50 with the electrolytic solution but also replenishing water consumed by electrolysis, uniformizing the concentration of the electrolytic solution, and cooling the dipolar electrolyzer 50 through circulation of the electrolytic solution.

### [Gas-liquid separation tank]

It is preferable that the gas-liquid separation tanks 72 are provided at the upper portion of the plurality of bipolar electrolyzers 50_1 to 50_N and are connected to the plurality of bipolar electrolyzers 50_1 to 50_N. The gas-liquid separation tanks 72 separate generated gases (hydrogen or oxygen) from the electrolytic solution and store the electrolytic solution that flows in from the plurality of bipolar electrolyzers 50_1 to 50_N. The gas-liquid separation tanks 72 include an oxygen separation tank 72o and a hydrogen separation tank 72h. One oxygen separation tank 72o is connected to the plurality of bipolar electrolyzers 50_1 to 50_N, and one hydrogen separation tank 72h is connected to the plurality of bipolar electrolyzers 50_1 to 50_N. The locations of the gas-liquid separation tanks 72 with respect to the locations of the plurality of bipolar electrolyzers 50_1 to 50_N are not particularly limited. For example, as in the alkaline water electrolysis system 70B illustrated in FIG. 1B, the gas-liquid separation tanks 72 may be provided at the lower portions of the plurality of bipolar electrolyzers 50_1 to 50_N and be connected to the plurality of bipolar electrolyzers 50_1 to 50_N.

The oxygen separation tank 72o separates a mixture of oxygen and the electrolytic solution that flows in from the bipolar electrolyzers 50 into the oxygen gas in the upper gas phase and the electrolytic solution in the lower liquid phase. The separated oxygen is discharged from an outlet provided at the upper portion of the oxygen separation tank 72o. The separated electrolytic solution is stored inside the oxygen separation tank 72o, flows out from the outlet provided at the lower portion of the oxygen separation tank 72o, and flows back into the bipolar electrolyzers 50.

The hydrogen separation tank 72h separates a mixture of hydrogen and the electrolytic solution that flows in from the bipolar electrolyzers 50 into hydrogen in the upper gas phase and the electrolytic solution in the lower liquid phase. The separated hydrogen is discharged from an outlet provided at the upper portion of the hydrogen separation tank 72h. The separated electrolytic solution is stored inside the hydrogen separation tank 72h, flows out from the outlet port below the hydrogen separation tank 72h, and flows back into the bipolar electrolyzers 50.

Note that oxygen or hydrogen discharged from the outlet of the gas-liquid separation tank 72 contains alkali mist. Therefore, the gas-liquid separation tank 72 preferably includes a device that is provided downstream to the outlet and can liquefy excess mist and return it to the gas-liquid separation tank 72, such as a mist separator or a cooler, for example.

In the gas-liquid separation tank 72, the degree of gas-liquid separation is determined by the linear flux of the electrolytic solution stored inside, the floating velocity of gas bubbles, and the residence time of the gas. Once the degree of gas-liquid separation is appropriately determined, problems such as a decrease in gas purity due to mixing of oxygen and hydrogen can be avoided when the electrolytic solution and the like flow in from the bipolar electrolyzers 50 to the gas-liquid separation tank 72.

The capacity of the gas-liquid separation tank 72 is preferably small in view of the footprint. However, if the volume is too small, fluctuation of the liquid level of the electrolytic solution stored inside the gas-liquid separation tank 72 would increase due to changes in pressure or current. Therefore, the capacity of the gas-liquid separation tank 72 is preferably designed by taking fluctuations in the liquid level of the electrolytic solution into consideration. The gas-liquid separation tank 72 may further include a liquid level gauge to measure the level of the liquid level of the electrolytic solution stored inside.

The shape of the gas-liquid separation tank 72 is not limited as long as the electrolytic solution is stored inside, and it may be cylindrical, for example. The gas-liquid separation tank 72 is preferably formed of an alkali resistant metallic material, such as nickel or SUS.

The gas-liquid separation tank 72 preferably has a resin lining layer on the inner surface thereof. When the gas-liquid separation tank 72 has a resin lining layer on the inner surface thereof, the outer surface is preferably covered with a heat insulator.

The resin lining layer has a thickness of preferably 0.5 mm to 4.0 mm, and more preferably 1.0 mm to 2.0 mm. If the thickness is less than 0.5 mm, degradation of the inner surface of the gas-liquid separation tank 72 caused by gases and the electrolytic solution is more likely to occur. If the thickness is more than 4.0 mm, high temperatures and alkali release the residual stress, which would increase the likelihood of deformation or delamination. When the thickness of the resin lining layer is in the above range, the durability of the gas-liquid separation tank 72 is improved.

The standard deviation of the thickness of the resin lining layer is preferably 1.0 mm or less, and 0.5 mm or less. By reducing the deviation in the thickness of the resin lining layer, the durability of the gas-liquid separation tank 72 is improved. The deviation in the thickness of the resin lining layer can be reduced by adjusting the conditions of the blast treatment on the surface of the gas-liquid separation tank 72, which is performed prior to formation of the resin lining layer.

The resin lining layer preferably has two or more layers. The resin lining layer can be formed by known methods. Such methods include, for example, rotary firing, application of powder coating, liquid coating, and spraying. Prior to formation of the resin lining layer, one or more of degreasing, blasting with sand, primer treatment, etc. may be performed to the inner surface of the gas-liquid separation tank 72.

The resin lining layer is preferably formed from a fluorinated resin material. Examples of the fluorinated resin material include, for example, at least one selected from the group consisting of polytetrafluoroethylene (PTFE), tetrafluoroethylene-perfluoroalkyl vinyl ether copolymer (PFA), tetrafluoroethylene-hexafluoropropylene copolymer (FEP), and tetrafluoroethylene-ethylene copolymer (ETFE). When the resin lining layer is made from a fluorinated resin material, the durability of the gas-liquid separation tanks 72 against electrode liquid is improved.

The heat insulator may be any known insulation material, such as glass wool and a foam, for example. The inner surface of the gas-liquid separation tank 72 is susceptible to degradation due to gas and the electrolytic solution particularly under high temperature conditions, and such degradation can be suppressed by covering the outer surface of the tank 72 with a heat insulator.

As mentioned above, the gas-liquid separation tanks 72 are preferably provided at the upper portions of the plurality of bipolar electrolyzers 50_1 to 50_N. This allows the electrolytic solution to circulate stably and promotes self-circulation even when fluctuating power is applied to the alkaline water electrolysis system 70, because the liquid with a higher density are guided to the lower side and gases with lower density are guided to the upper side. Further, when the bipolar electrolyzers 50 are stopped, the density difference between the gas-liquid separation tanks 72 and the bipolar electrolyzers 50 can be used to fill the interior of the bipolar electrolyzers 50 with the electrolytic solution stored in the gas-liquid separation tanks 72. As a result, diffusion of gases through the diaphragm can be inhibited. In addition, the problem of mixing of impurity gases between the oxygen separation tank 72o and the hydrogen separation tank 72h through the bipolar electrolyzers 50 can be prevented. Further, when the bipolar electrolyzers 50 are located at the upper portion of the gas-liquid separation tanks 72, in a maintenance of a bipolar electrolyzer 50, it is necessary to lift the bipolar electrolyzer 50 up to the top of the gas-liquid separation tanks 72 using a crane or the like, which makes the maintenance complicated. In contrast, when the bipolar electrolyzers 50 are provided at the lower portion of the gas-liquid separation tanks 72, maintenance can be performed smoothly because a bipolar electrolyzer 50 does not need to be lifted by a crane or the like.

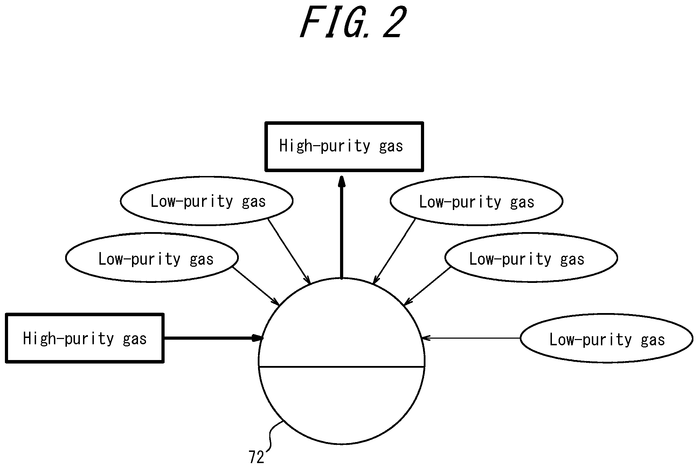

In addition, as described above, the gas-liquid separation tanks 72 are connected to the plurality of bipolar electrolyzers 50_1 to 50_N, and high-purity gases generated in the plurality of bipolar electrolyzers 50_1 to 50_N flow into the gas-liquid separation tanks 72 in large amounts. Therefore, even if the concentration of impurities increases in any of the bipolar electrolyzers 50, low-purity gas is diluted at once with a large amount of high-purity gas inside the gas-liquid separation tank 72, so that the gases discharged from the gas-liquid separation tanks 72 can be made to high-purity gases (see FIG. 2). This reduces the frequency of purging of an inert gas associated with shutdown of the entire system and improves the sustainability of supply of high-purity hydrogen. As a result, an alkaline water electrolysis system 70 that can continuously produce high-purity hydrogen can be realized.

### [Heat exchanger]

Heat exchangers 79 are preferably provided inside a gas-liquid separation tank 72. The amount of heat exchanged by the heat exchanger 79 is controlled by the control unit 30, so that the temperature of the electrolytic solution stored inside the gas-liquid separation tank 72 is controlled. In this case, the heat exchanger 79 may be controlled by the control unit 30 based on the flow rate of the electrolytic solution measured by a flow meter (not illustrated).

When a heat exchanger 79o is provided inside the oxygen separation tank 72o, the heat exchanger 79o controls the temperature of the electrolytic solution stored inside the oxygen separation tank 72o. Because the oxygen separation tank 72o is connected to the plurality of bipolar electrolyzers 50_1 to 50_N, the heat exchanger 79o can efficiently adjust the temperature of the electrolytic solution. In addition, because the heat exchanger 79o is provided inside the oxygen separation tank 72o, the footprint of the entire system is reduced.

When a heat exchanger 79h is provided inside the hydrogen separation tank 72h, the heat exchanger 79h controls the temperature of the electrolytic solution stored inside the hydrogen separation tank 72h. Because the hydrogen separation tank 72h is connected to the plurality of bipolar electrolyzers 50_1 to 50_N, the heat exchanger 79h can efficiently adjust the temperature of the electrolytic solution. In addition, because the heat exchanger 79h is provided inside the hydrogen separation tank 72h, the footprint of the entire system is reduced.

For example, when all of the bipolar electrolyzers 50 are operated at an operation rate of 100%, the temperature of the electrolytic solution rises in all of the bipolar electrolyzers 50 being operated. In such a case, the heat exchanger 79 cools the electrolytic solution stored inside the gas-liquid separation tank 72. For example, when some of the bipolar electrolyzers 50 are operated at an operation rate of 100% and some of the bipolar electrolyzers 50 are stopped, the temperature of the electrolytic solution drops in the bipolar electrolyzers 50 being stopped. In such a case, the heat exchanger 79 heats the electrolytic solution stored inside the gas-liquid separation tank 72. In this way, the temperature of the electrolytic solution is controlled as appropriate according to whether the plurality of bipolar electrolyzers 50_1 to 50_N are operated or stopped, so that the temperature of the electrolytic solution can be maintained at an appropriate temperature throughout the system. As a result, the alkaline water electrolysis system 70 that operates with a high efficiency can be realized.

As described above, because the heat exchangers 79 are provided inside the gas-liquid separation tanks 72 which are connected to the plurality of bipolar electrolyzers 50_1 to 50_N, the temperature of the electrolytic solution stored inside the gas-liquid separation tanks 72 can be easily maintained at an appropriate temperature. For example, even when of the alkaline water electrolysis system 70 is stopped operating and then is restarted, the system is prevented from wasting power. As a result, the alkaline water electrolysis system 70 that operates efficiently and continuously can be realized.

### [Control unit]

The control unit 30 can be any computer capable of performing certain processes by means of a program. For example, the control unit 30 may be a laptop computer (personal computer), a cell phone such as a smartphone, a tablet terminal or the like used by an operator. The control unit 30 controls the elements provided to the alkaline water electrolysis system 70.

The control unit 30 includes a control unit and a storage unit. The control unit may be configured from dedicated hardware, a general-purpose processor, or a processor dedicated to particular processes. The storage unit may include one or more memories, such as a semiconductor memory, a magnetic memory, or an optical memory. Each memory in the storage unit may function, for example, as a main storage, an auxiliary storage, or a cache memory. Each memory may not be provided inside the control unit 30, but may be provided outside the control unit 30.

The control unit 30 generates and outputs control signals to the rectifier 74 to control the bipolar electrolyzers 50 to be operated or stopped. For example, the control unit 30 outputs a control signal to a rectifier 74 to operate the bipolar electrolyzer 50 at an operation rate of 100%. For example, the control unit 30 outputs a control signal to a rectifier 74 to operate the bipolar electrolyzer 50 at an operation rate of 50%. For example, the control unit 30 outputs a control signal to a rectifier 74 to operate the bipolar electrolyzer 50 at an operation rate of 30%. For example, the control unit 30 outputs a control signal to a rectifier 74 to stop the bipolar electrolyzer 50. In this way, the control unit 30 appropriately determines a predetermined DC voltage to be supplied to the each of the plurality of bipolar electrolyzers 50_1 to 50_N, so that each of the plurality of bipolar electrolyzers 50_1 to 50_N is controlled to be operated or stopped (or the operation rate of each of the plurality of bipolar electrolyzers 50_1 to 50_N is controlled).

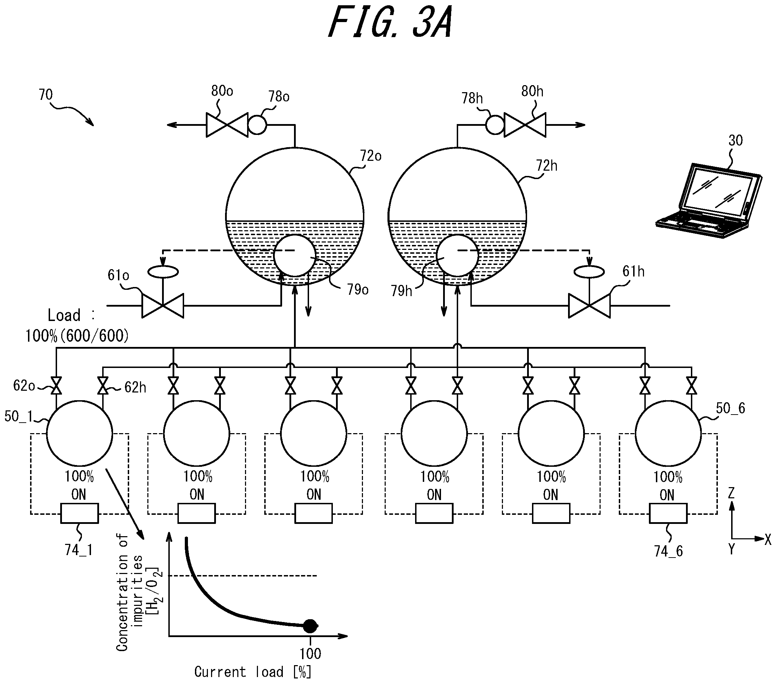

For example, as illustrated in FIG. 3A, when the alkaline water electrolysis system 70 includes six bipolar electrolyzers, the control unit 30 controls bipolar electrolyzers 50_1, 50_2, 50_3, 50_4, 50_5, and 50_6 to operate at an operation rate of 100%. In this case, the current load in the alkaline water electrolysis system 70 is (600% / 600%) × 100 = 100%.

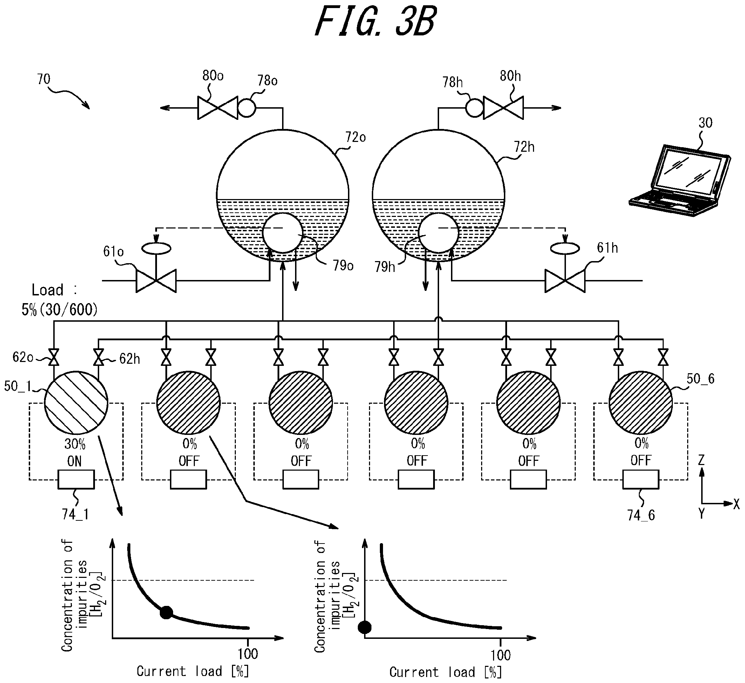

For example, as illustrated in FIG. 3B, when the alkaline water electrolysis system 70 includes six bipolar electrolyzers, the control unit 30 controls the bipolar electrolyzer 50_1 to be operated at an operation rate of 30%, and controls the bipolar electrolyzers 50_2, 50_3, 50_4, 50_5, and 50_6 to be stopped. In this case, the current load in the alkaline water electrolysis system 70 is (30% / 600%) × 100 = 5%.

Here, the solid line graphs indicating typical relationships between the current load and the concentration of impurities is illustrated. The horizontal axis represents the current load [%] and the vertical axis represents the concentration of impurities [H₂/O₂]. The concentration of impurities is preferably low, but tends to increase as the current load decreases.

It can be seen from FIG. 3A that, when the current loads of the bipolar electrolyzers 50_1 to 50_6 are 100%, the black circle indicating the concentration of impurities is extremely lower than the dotted line indicating the allowable limit of the concentration of impurities.

It can be seen from FIG. 3B that, when the current load of the bipolar electrolyzer 50_1 is 30%, the black circle indicating the concentration of impurities is lower than the dotted line indicating the allowable limit of the concentration of impurities. Furthermore, when the current loads of the bipolar electrolyzers 50_2 to 50_6 are 0%, the black circle indicating the concentration of impurities is extremely lower than the dotted line indicating the allowable limit of the concentration of impurities.

It can be seen from FIGS. 3A and 3B that each of the plurality of bipolar electrolyzers 50_1 to 50_N is appropriately controlled to be operated or stopped by the control unit 30 in the alkaline water electrolysis system 70, so that the concentration of impurities inside all of the bipolar electrolyzers 50 can be maintained at an extremely low level even if the current load in the system is reduced, for example, from 100% to 5%.

In other words, it is suggested that the alkaline water electrolysis system 70 which is capable of continuously producing high-purity hydrogen can be realized by provision of the plurality of bipolar electrolyzers 50_1 to 50_N which produce high-purity gas when operated or are filled with the liquid when stopped, and a gas-liquid separation tanks 72 which are connected to the plurality of bipolar electrolyzers 50_1 to 50_N so as to help to dilute low-purity gas with a large amount of high-purity gas at once.

The control unit 30 controls the bipolar electrolyzers 50 to be operated or stopped so that the current to operate the alkaline water electrolysis system 70 equals a target current (e.g., 10 [kA]). For example, the control unit 30 outputs control signals to the rectifiers 74 to operate or stop the respective plurality of bipolar electrolyzers 50_1 to 50_N so that a target current is evenly distributed to the bipolar electrolyzer(s) 50 to be operated. For example, the control unit 30 outputs control signals to the rectifiers 74 to operate or stop the respective plurality of bipolar electrolyzers 50_1 to 50_N so that a target current is distributed unevenly to the bipolar electrolyzer(s) 50 to be operated.

The control unit 30 controls the bipolar electrolyzers 50 to be operated or stopped based on the ratio of the current density of an operating bipolar electrolyzer(s) 50 to the maximum current density (e.g., 10 [kA/m²]). For example, if the current density of the operating bipolar electrolyzer 50 is equal to or less than 40% of the maximum current density, the control unit 30 outputs a control signal to the rectifier 74 to stop the operating bipolar electrolyzer 50. Or, if the current density of the operating bipolar electrolyzer 50 is more than 40% of the maximum current density, the control unit 30 outputs a control signal to the rectifier 74 to cause the bipolar electrolyzer 50 to continue to operate. For example, if the current density of the operating bipolar electrolyzer 50 is equal to or less than 20% of the maximum current density, the control unit 30 outputs a control signal to the rectifier 74 to stop the operating bipolar electrolyzer 50. Or, if the current density of the operating bipolar electrolyzer 50 is more than 20% of the maximum current density, the control unit 30 outputs a control signal to the rectifier 74 to cause the bipolar electrolyzer 50 to continue to operate. For example, if the current density of the operating bipolar electrolyzer 50 is equal to or less than 10% of the maximum current density, the control unit 30 outputs a control signal to the rectifier 74 to stop the operating bipolar electrolyzer 50. Or, if the current density of the operating bipolar electrolyzer 50 is more than 10% of the maximum current density, the control unit 30 outputs a control signal to the rectifier 74 to cause the bipolar electrolyzer 50 to continue to operate. For example, if the current density of the operating bipolar electrolyzer 50 is equal to or less than 5% of the maximum current density, the control unit 30 outputs a control signal to the rectifier 74 to stop the operating bipolar electrolyzer 50. Or, if the current density of the operating bipolar electrolyzer 50 is more than 5% of the maximum current density, the control unit 30 outputs a control signal to the rectifier 74 to cause the bipolar electrolyzer 50 to continue to operate. Note that the value of the ratio is not limited to 40%, 20%, 10%, or 5%, but may be set arbitrarily by the control unit 30.

The control unit 30 controls the bipolar electrolyzers 50 to be operated or stopped based on the power supplied to the alkaline water electrolysis system 70. For example, if the power supplied to the alkaline water electrolysis system 70 is equal to or more than a first threshold, the control unit 30 outputs controls signal to the rectifiers 74 to operate all of the bipolar electrolyzers 50. In this case, the control unit 30 may control each of the bipolar electrolyzers 50 so that the current flows evenly to all of the bipolar electrolyzers 50, or may control each of the bipolar electrolyzers 50 so that the current flows unevenly to all of the bipolar electrolyzers 50. For example, if the power supplied to the alkaline water electrolysis system 70 is less than the first threshold, the control unit 30 outputs control signal to the rectifiers 74 to operate some of the bipolar electrolyzers 50 and outputs control signals to the rectifiers 74 to stop the rest of the bipolar electrolyzers 50. In this case, the control unit 30 can arbitrarily control the number of bipolar electrolyzers 50 to be operated and the number of bipolar electrolyzers 50 to be stopped. The first threshold may be set arbitrarily by the control unit 30 and is not limited to any particular value.

Upon supplying power to the alkaline water electrolysis system 70, the control unit 30 controls the number of bipolar electrolyzers 50 to be operated based on the current density of a bipolar electrolyzer 50 that has started operating. For example, if the current density of a bipolar electrolyzer 50 that has started operating (e.g., a third bipolar electrolyzer) is equal to or more than the second threshold, the control unit 30 determines to increase the number of bipolar electrolyzers 50 to operate. The control unit 30 then outputs control signals to a rectifier 74 to operate a new bipolar electrolyzer 50 (e.g., a fourth bipolar electrolyzer) and to cause the bipolar electrolyzers 50 that have already started operating (e.g., the first to third bipolar electrolyzers) to continue to operate. For example, if the current density of the bipolar electrolyzer 50 that has started operating (e.g., the third bipolar electrolyzer) is less than the second threshold, the control unit 30 determines to maintain the number of bipolar electrolyzers 50 in operation. The control unit 30 then outputs control signals to the rectifiers 74 to cause the bipolar electrolyzers 50 that have already started operating (e.g., the first to third bipolar electrolyzers) to continue to operate. Note that the second threshold may be set arbitrarily by the control unit 30, and the is not limited to a particular value.

The control unit 30 generates a control signal to control an open/close valve 62 and outputs it to the open/close valve 62. For example, when the control unit 30 outputs a control signal to an open/close valve 62 to cause the open/close valve 62 to be opened, the valve 62 is opened. This permits the electrolytic solution to flow between the bipolar electrolyzer 50 and the gas-liquid separation tank 72. For example, when the control unit 30 outputs a control signal to the open/close valve 62 to cause the open/close valve 62 to be closed, the valve 62 is closed. This inhibits the electrolytic solution from flowing between the bipolar electrolyzer 50 and the gas-liquid separation tank 72.

The control unit 30 generates a control signal to control a pressure control valve 80 and outputs it to the pressure control valve 80. For example, the control unit 30 controls the pressure control valve 80o connected to the oxygen separation tank 72o based on the measurement result of the pressure gauge 78o that measures the pressure inside the oxygen separation tank 72o. As a result, the pressure inside the oxygen separation tank 72o is adjusted to an appropriate pressure (e.g., 100 kPa). For example, the control unit 30 controls the pressure control valve 80h connected to the hydrogen separation tank 72h based on the measurement result of the pressure gauge 78h that measures the pressure inside the hydrogen separation tank 72h. As a result, the pressure inside the hydrogen separation tank 72h is adjusted to an appropriate pressure (e.g., 100 kPa).

The control unit 30 generates a control signal to control a temperature control valve 61 and outputs it to the temperature control valve 61. For example, the control unit 30 controls the temperature control valve 61o connected to the heat exchanger 79o based on the flow rate of the electrolytic solution measured by a flow meter. As a result, the temperature of the electrolytic solution stored inside the oxygen separation tank 72o is adjusted to an appropriate temperature (e.g., 80 °C). For example, the control unit 30 controls the temperature control valve 61h connected to the heat exchanger 79h based on the flow rate of the electrolytic solution measured by a flow meter. As a result, the temperature of the electrolytic solution stored inside the hydrogen separation tank 72h is adjusted to an appropriate temperature (e.g., 80 °C).

The control unit 30 generates a control signal to control the amount of heat exchanged by a heat exchanger 79 and outputs it to the heat exchanger 79. For example, the control unit 30 controls the amount of heat exchanged by the heat exchanger 79o provided inside the oxygen separation tank 72o based on the flow rate of the electrolytic solution measured by the flow meter. As a result, the electrolytic solution stored inside the oxygen separation tank 72o is cooled, heated, or kept warm. For example, the control unit 30 controls the amount of heat exchanged by the heat exchanger 79h provided inside the hydrogen separation tank 72h based on the flow rate of the electrolytic solution measured by the flow meter. As a result, the electrolytic solution stored inside the hydrogen separation tank 72h is cooled, heated, or kept warm.

In addition to the bipolar electrolyzers 50, the rectifiers 74, the open/close valves 62, the pressure control valves 80, the temperature control valves 61, and the heat exchangers 79 described above, the control unit 30 controls various elements provided to the alkaline water electrolysis system 70.

### [Temperature control valve]

The temperature control valves 61 are controlled by the control unit 30. The temperature control valves 61 are connected to the heat exchangers 79 and adjust the temperatures of the electrolytic solution so that the temperatures of the electrolytic solution stored inside the gas-liquid separation tanks 72 are within a predetermined range (e.g., 50 °C to 90 °C, preferably 60 °C to 80 °C, more preferably 75 °C to 85 °C). For example, the temperature control valve 61o is connected to the heat exchanger 79o and is controlled by the control unit 30 based on the flow rate of the electrolytic solution measured by a flow meter to adjust the temperature of the electrolytic solution stored inside the oxygen separation tank 72o. For example, the temperature control valve 61h is connected to the heat exchanger 79h and is controlled by the control unit 30 based on the flow rate of the electrolytic solution measured by a flow meter to adjust the temperature of the electrolytic solution stored inside the hydrogen separation tank 72h. When the temperature control valves 61 are properly controlled by the control unit 30, an excessive increase in the temperature of the electrolytic solution or an excessive decrease in the temperature of the electrolytic solution is prevented, and the temperature of the electrolytic solution can be set to an appropriate temperature.

### [Pressure gauge]

The pressure gauges 78 are provided at the upper portiond of the gas-liquid separation tanks 72 and are connected to the gas-liquid separation tanks 72. For example, the pressure gauge 78o measures the pressure inside the oxygen separation tank 72o and outputs the measurement result to the control unit 30. Based on the measurement result, the control unit 30 controls the pressure control valve 80o to maintain the pressure inside the oxygen separation tank 72o to an appropriate pressure. For example, the pressure gauge 78h measures the pressure inside the hydrogen separation tank 72h and outputs the measurement result to the control unit 30. Based on the measurement result, the control unit 30 controls the hydrogen separation tank 72h to maintain the pressure inside the hydrogen separation tank 72h to an appropriate pressure.

### [Pressure control valve]

The pressure control valves 80 are controlled by the control unit 30. The pressure control valves 80 are provided at the upper portion of the gas-liquid separation tanks 72 and are connected to the gas-liquid separation tanks 72. For example, the pressure control valve 80o is connected to the oxygen separation tank 72o and is controlled by the control unit 30 based on the pressure inside the oxygen separation tank 72o measured by the pressure gauge 78o. For example, the pressure control valve 80h is connected to the hydrogen separation tank 72h and is controlled by the control unit 30 based on the pressure inside the hydrogen separation tank 72h measured by the pressure gauge 78h.

When the pressure control valves 80 are properly controlled by the control unit 30, an excessive increase in the pressures inside the gas-liquid separation tanks 72 or an excessive decrease in the pressures inside the gas-liquid separation tanks 72 can be prevented and the pressures inside the gas-liquid separation tanks 72 can be set to an appropriate pressure. In addition, even if the pressure inside a gas-liquid separation tank 72 exceeds the design pressure due to gas generated by the electrolysis of water, the pressure can be safely reduced.

### [Flow meter]

A flow meter is provided at the lower portion of the dipolar electrolyzers 50 and is connected to the dipolar electrolyzers 50. The flow meter measures the flow rate of the electrolytic solution circulating through the bipolar electrolyzers 50 and outputs the measurement result to the control unit 30. Based on the measurement result, the control unit 30 controls the heat exchanger 79o and the temperature control valve 61o to maintain the electrolytic solution stored inside the oxygen separation tank 72o at an appropriate temperature. In addition, based on the measurement result, the control unit 30 controls the heat exchanger 79h and the temperature control valve 61h to maintain the electrolytic solution stored inside the hydrogen separation tank 72h at an appropriate temperature.

The flow meter outputs the measurement result to the control unit 30 as appropriate, and the control unit 30 appropriately controls the temperature of the electrolytic solution based on the measurement result, thereby enabling the electrolytic solution to stably circulate and promoting self-circulation even when fluctuating power is applied to the alkaline water electrolysis system 70. As a result, an alkaline water electrolysis system 70 that can operate at high efficiency and produce high-purity hydrogen can be realized.

### [Heating device]

A heating device is provided at a lower portion of a gas-liquid separation tank 72 and heats the electrolytic solution stored inside the gas-liquid separation tank 72. The heating device is, for example, a heater. In addition to by employing the heat exchanger 79 and the temperature control valve 61, also by using the heating device, the electrolytic solution stored inside the gas-liquid separation tank 72 is heated and the temperature of the electrolytic solution that has cooled is instantly heated back to a certain temperature, for example. As a result, the alkaline water electrolysis system 70 that operates with a high efficiency can be realized. In addition, for example, even when operation of the alkaline water electrolysis system 70 is stopped and then is restarted, the system is prevented from wasting power. As a result, the alkaline water electrolysis system 70 that operates efficiently and continuously can be realized.

### [Other components]

In addition to the components described above, the alkaline water electrolysis system 70 may include a water supply unit, an oxygen meter, an hydrogen meter, a detector, and the like. Because known components can be employed as these components, a detailed description is omitted.

Because the alkaline water electrolysis system 70 according to the present embodiment has the configuration described above, the alkaline water electrolysis system 70 can reduce the frequency of purging of an inert gas associated with shutdown of the entire system and improve the sustainability of supply of high-purity hydrogen. As a result, an alkaline water electrolysis system 70 that can continuously produce high-purity hydrogen can be realized.

### <Configuration of dipolar electrolyzer>

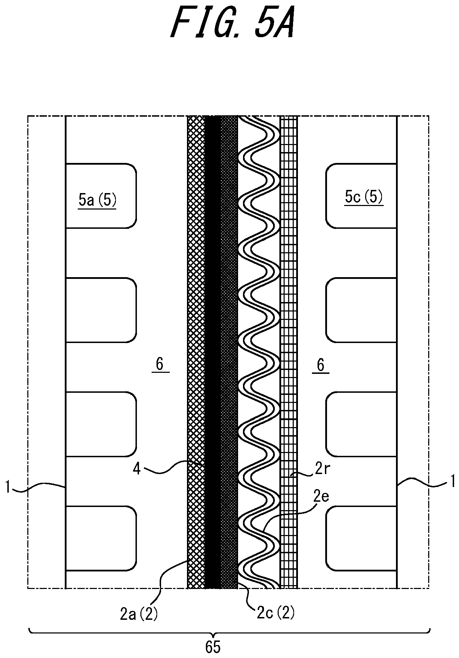

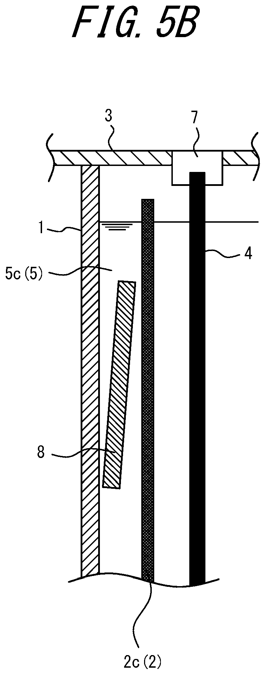

Next, with reference to FIGS. 4, 5A, and 5B, an example of the configuration of a bipolar electrolyzer 50 according to the present embodiment will be described in detail.

In a bipolar electrolyzer 50, a plurality of dipolar elements 60 are arranged between an anode terminal element (anode terminal) 51a and a cathode terminal element (cathode terminal) 51c. The anode terminal element 51a and the cathode terminal element 51c are electrically connected to a rectifier 74. In addition, the anode terminal element 51a is electrically connected to the leftmost anode 2a, and the cathode terminal element 51c is electrically connected to the rightmost cathode 2c. Current flows from the anode terminal element 51a, through cathodes 2c and anodes 2a included in the plurality of dipolar elements 60, toward the cathode terminal element 51c.

In the bipolar electrolyzer 50, a fast head 51g1, an insulating plate 51i1, an anode terminal element 51a, an anode side gasket portion 7a, a diaphragm 4, a cathode side gasket portion 7c, a plurality of dipolar elements 60, an anode side gasket portion 7a, a diaphragm 4, a cathode side gasket portion 7c, a cathode terminal element 51c, an insulating plate 51i2, and a loose head 51g2, are arranged in this order from left to right. The plurality of dipolar elements 60 are arranged so that the cathode 2c faces toward the anode terminal element 51a side and the anode 2a faces toward the cathode terminal element 51c side. The entire bipolar electrolyzer 50 is tightened by tie-rods 51r. Note that a hydraulic cylinder or the like may be used as the tightening mechanism. In addition, the arrangement of the bipolar electrolyzer 50 can be arbitrarily arranged either from the anode side or from the cathode side, and is not limited to the above order.

As compared to a monopolar electrolyzer, the bipolar electrolyzer 50 can reduce the current of the power supply, and can produce a larger amount of a compound, a given substance, or the like in a shorter time. As a result, use of bipolar electrolyzers can reduce the cost as compared to use of monopolar electrolyzers in an industrial application.

### [Bipolar element]

The bipolar elements 60 each include an anode 2a, a cathode 2c, a partition wall 1 separating the anode 2a and the cathode 2c from each other, and an outer frame 3 bordering the partition wall 1. In the dipolar element 60, one side is the anode 2a and the other side is the cathode 2c.

The number of repetition of dipolar elements 60 is not particularly limited, and dipolar elements 60 are repeated in the number required for the designed production quantity, but the number is preferably 50 to 500, more preferably 70 to 300, and particularly preferably 100 to 200.

If the number of repetition of the dipolar elements 60 is small, the negative effects by leakage currents on gas purity are mitigated. Or, if the number of repetition of dipolar elements 60 is large, it becomes difficult to distribute the electrolytic solution evenly to each electrolytic cell 65. In addition, if the number of repetition of dipolar elements 60 is too large, fabrication of the bipolar electrolyzer 50 becomes difficult. If poorly fabricated dipolar elements 60 are stacked in a large number, the sealing surface pressure becomes uneven and leakage of the electrolytic solution and leakage of gases are more likely to occur in the bipolar electrolyzer 50. In this regard, when the number of repetition of the dipolar elements 60 satisfies the above mentioned range, the self-discharge that occurs when the power supply is interrupted is reduced and the electrical control system can be stabilized. In addition, the pump power is reduced and power can be stored highly efficiently, for example, the leakage current can be reduced.

### [Electrolytic cell]

An electrolytic cell 65 has a partition wall 1, anode compartment 5a, and an anode 2a included in one adjacent bipolar element 60, a cathode 2c, a cathode compartment 5c, and a partition wall 1 included in the other adjacent bipolar element 60, an outer frame 3, a membrane 4, and a gasket 7. The cathode compartment 5c includes a current collector 2r, a conductive elastic body 2e, and a rectifying plate 6. The electrolytic cell 65 may include a baffle plate 8.

The temperature of the electrolytic solution inside the electrolytic cell 65 is preferably 40 °C or higher, and more preferably 80 °C or higher. The temperature of the electrolytic solution inside the electrolytic cell 65 is preferably 110 °C or lower, and more preferably 95 °C or lower. When the temperature of the electrolytic solution inside the electrolytic cell 65 satisfies the above range, degradation of the components of the alkaline water electrolysis system 70 due to heat can be effectively suppressed while maintaining a high electrolysis efficiency.

The lower limit of the current density given to the electrolytic cell 65 is preferably 1 [kA/m²] or more, and more preferably 8 [kA/m²] or more. The upper limit of the current density given to he electrolytic cell 65 is preferably 15 [kA/m²] or less, and more preferably 10 [kA/m²] or less. In particular, when a variable power supply is used as in the case of the alkaline water electrolysis system 70, the upper limit of the current density is preferably set within the above range.

The internal pressure of the electrolytic cell 65 is preferably 3 [kPa] to 1000 [kPa], and more preferably 3 [kPa] to 300 [kPa],

### - Partition wall -

The partition wall 1 isolates the anode 2a and the cathode 2c from each other. The partition wall 1 is electrically connected to the current collector 2r via the rectifying plate 6.

The partition wall 1 is preferably formed of a conductive material. Examples of the conductive material include, for example, nickel, nickel alloys, mild steel, and materials having nickel plated on a nickel alloy. When the partition wall 1 is formed of a conductive material, a uniform supply of electric power is achieved. The portion of the partition 1 in contact with the electrolytic solution is particularly preferably made of nickel. This improves alkali resistance, heat resistance, and the like.

The shape of the partition wall 1 is not limited, but the partition wall 1 preferably has a plate shape with a predetermined thickness. The plan view shape of the partition wall 1 may be a rectangular shape, a circular shape, an elliptical shape, or the like, and the corners may be rounded if the partition wall 1 has a rectangular shape.

### - Electrode -

The anode 2a is provided in the anode compartment 5a and the cathode 2c is provided in the cathode compartment 5c. The anode 2a and cathode 2c provided in one electrolytic cell 65 are electrically connected to each other. The cathode 2c is also electrically connected to the current collector 2r via the conductive elastic material 2e.

The electrodes 2 are preferably porous bodies to increase the surface areas used for electrolysis of water and to efficiently remove gases generated by electrolysis of water from the surfaces of the electrodes 2. Examples of porous bodies include a plain weave mesh, a perforated metal, an expanded metal, and a metal foam.

The electrode 2 may be a substrate per se, but preferably have a catalyst layer with high reaction activity on the surface of a substrate.

The substrate is preferably made of a material such as mild steel, stainless steel, nickel, or nickel-based alloys, for example, in view of their resistance to the operating environment.

The catalyst layer of the anode 2a is preferably formed of a material having a high oxygen generating capacity and good durability, and examples thereof include nickel, cobalt, or iron or platinum group elements. In addition, examples of materials to achieve the desired catalytic activity, durability, and the like include, for example, elemental metals such as palladium, iridium, platinum, gold, ruthenium, rhodium, cerium, nickel, cobalt, tungsten, iron, molybdenum, silver, copper, zirconium, titanium, hafnium, lanthanides, compounds such as oxides, composite oxides or alloys made of multiple elemental metals, or mixtures of these, and carbon materials such as graphene.

The catalyst layer of cathode 2c is preferably formed of a material having a high hydrogen generating capacity, such as nickel, cobalt, or iron or platinum group elements. Furthermore, examples of materials to achieve the desired catalytic activity, durability, and the like include, for example, elemental metals, compounds such as oxides, composite oxides or alloys made of multiple metal elements, or mixtures of these. Specifically, for example, Raney alloys made of a combination of several materials such as Raney nickel, nickel and aluminum, or nickel and tin, porous coatings made by plasma spraying using nickel or cobalt compounds as a raw material, alloys or composite compounds of nickel and elements selected from cobalt, iron, metals or oxides of platinum group elements such as platinum or ruthenium with high hydrogen generating capacity and metals, mixtures of metals or oxides of these platinum group elements and compounds of other platinum group elements such as iridium and palladium or a compound of rare earth metals such as lanthanum or cerium, and carbon materials such as graphene. To achieve high catalytic activity, durability, and the like, multiple catalyst layers formed of the above materials may be stacked, or multiple materials may be mixed in a catalyst layer. An organic material such as a polymeric material may be included in the material to improve durability and adhesion to the substrate.

The bath voltage is highly dependent on the performance of the electrodes 2. By reducing the bath voltage, energy consumption can be reduced in the alkaline water electrolysis system 70. The bath voltage includes, in addition to the voltage required for the electrolysis of water that is theoretically determined, an overvoltage of an anode reaction (generating oxygen), an overvoltage of a cathode reaction (generating hydrogen), and a voltage dependent on the inter-electrode distance between the anode 2a and the cathode 2c, and the like. As used herein, the term "overvoltage" refers to a voltage that needs to be applied excessively beyond the theoretical decomposition potential to cause a certain current flow. By reducing overvoltage, the bath voltage can be reduced.

The electrodes 2 preferably have high conductivity, high oxygen generation capacity or hydrogen generation capacity, and high wettability of the electrolytic solution on the surfaces of the electrodes 2. When the electrodes 2 have such characteristics, the overvoltage described above can be reduced. In addition, the electrodes 2 preferably have a characteristic that is resistant to corrosion of the substrate and the catalyst layer, detachment of the catalyst layer, dissolution into the electrolytic solution, and adhesion of inclusions to the membrane 4 even when unstable power such as renewable energy is supplied.

### - Current collector -

The current collector 2r transmits electricity to the conductive elastic body 2e and the electrode 2, supports the load received from the conductive elastic body 2e and the electrode 2, and allows the gas generated from the electrode 2 to pass through to the partition wall 1 side without any hindrance.

The current collector 2r preferably has a shape such as expanded metal, punched perforated plate, or the like. The current collector 2r preferably has an aperture ratio that is in the range where hydrogen gas generated from the electrode 2 is made to be flowed to the partition wall 1 side without any hindrance. If the aperture ratio is too large, risks of problems such as a decrease in the strength of the current collector 2r or a decrease in conductivity to the conductive elastic body 2e are increased. On the other hand, if the aperture ratio is too small, the gas may not escape properly. Hence, the aperture ratio of the current collector 2r is preferably set accordingly in view of these problems.

The current collector 2r is preferably formed of a material such as nickel, nickel alloys, stainless steel, or mild steel, for example, from the viewpoint of the conductivity and the alkali resistance. From the viewpoint of the corrosion resistance, the current collector 2r is preferably plated with nickel on nickel, mild steel, or a stainless steel-nickel alloy.

### - Conductive elastic body -

The conductive elastic body 2e is in contact with the current collector 2r and the electrode 2, and is provided between the current collector 2r and the cathode 2c. The conductive elastic body 2e evenly applies an appropriate pressure on the electrodes 2 to the extent that the diaphragm 4 is not damaged, thereby functioning to adhere the diaphragm 4 to the electrodes 2.

The conductive elastic body 2e is preferably conductive to the electrodes 2, but not inhibit the diffusion of gases generated from the electrodes 2. If diffusion of gases is inhibited by the conductive elastic body 2e, the electrical resistance would increase and the efficiency of electrolysis would decrease as the areas of the electrodes 2 used for water electrolysis reduce.

The structure of the conductive elastic body 2e is not limited and may be of any known structure. The conductive elastic material 2e may be, for example, a cushion mat produced by weaving nickel wires having a wire diameter of about 0.05 mm to 0.5 mm, and corrugating.

### - Outer frame -

The outer frame 3 is provided along the outer periphery of the partition wall 1 such as to border the partition wall 1. Although the shape of the outer frame 3 is not particularly limited as long as it can border the partition wall 1, the outer frame 3 may have an inner surface extending over the outer periphery of the partition wall 1 in the longitudinal direction with respect to the plane of the partition wall 1. The outer frame 3 is preferably set according to the plan view shape of the partition wall 1.

The outer frame 3 is preferably formed of conductive materials, such as nickel, nickel alloys, mild steel, and nickel alloys. From the viewpoint of the alkali resistance and the heat resistance, the outer frame 3 is preferably further plated with nickel on nickel, a nickel alloy, mild steel, or nickel alloy, for example.

### - Diaphragm -

The diaphragm 4 separates the anode compartment 5a having the anode 2a and the cathode compartment 5c having the cathode 2c. The diaphragms 4 are provided between the anode terminal element 51a and the bipolar element 60, between adjacent bipolar elements 60, and between the bipolar element 60 and the cathode terminal element 51c. The diaphragm 4 has ion permeability, allowing ions to pass through while separating hydrogen gas and oxygen gas from each other. The diaphragm 4 is configured from an ion exchange membrane having ion exchange ability, or a porous membrane capable of permeating the electrolytic solution. The diaphragm 4 preferably has low gas permeability, high ionic conductivity, low electronic conductivity, and high strength.

### -- Porous membrane --

A porous membrane has a plurality of fine through-holes, and has a structure that permits the electrolytic solution to pass through. Examples of the porous membrane having such a structure include, for example, polymer porous membranes, inorganic porous membranes, woven fabrics, and non-woven fabrics. These membranes are formed by applying a known technique.

The porous membrane preferably contains at least one polymer resin selected from the group consisting of polysulfone, polyethersulfone, and polyphenylsulfone, for example. This enables an excellent ion permeability to be maintained.

Because the porous membrane exhibits ionic conductivity when permeated with the electrolytic solution, it is desirable that the porous structural characteristics including the pore size, the porosity, and hydrophilicity are appropriately controlled. By properly controlling the porous structure of the porous membrane, it is possible to not only allow the electrolytic solution to pass through, but also to enhance the gas-blocking property of the generated gases.

The thickness of the porous membrane is not limited, but it is preferably 200 µm or more 700 µm or less, for example. When the thickness of the porous membrane is 250 µm or more, it is possible to achieve even better gas-blocking property and further improve the strength of the porous membrane against impact. From this viewpoint, the lower limit of the thickness of the porous membrane is more preferably 300 µm or more, even more preferably 350 µm or more, and still even more preferably 400 µm or more. On the other hand, when the thickness of the porous membrane is 700 µm or less, the permeability of ions is less likely to be inhibited by the resistance of the electrolytic solution contained in the pores during operation of the alkaline water electrolysis system 70, and a further excellent ion permeability can be maintained. From such viewpoints, the upper limit of the thickness of the porous membrane is more preferably 600 µm or less, even more preferably 550 µm or less, and still more even preferably 500 µm or less.

### -- Ion exchange membrane --

Either a cation exchange membrane that selectively permeates cations or an anion exchange membrane that selectively permeates anions may be used as the ion exchange membrane.

The material of the ion exchange membrane is not limited, and any known material can be used. The ion exchange membrane is preferably formed, for example, of a fluorinated resin or a modified resin of polystyrene-divinylbenzene copolymer. From the viewpoint of superior heat resistance and chemical resistance, it is particularly preferred that the ion exchange membrane is formed of a fluorinated resin.

### - Electrode compartment -

Each electrode compartment 5 allows the electrolytic solution to pass through, and is defined by a partition wall 1, an outer frame 3, and a diaphragm 4. The defined extent of the electrode compartment 5 varies depending on the structure of the outer frame 3 provided at the outer end of the partition wall 1. Each electrode compartment 5 includes an electrolytic solution inlet for introducing the electrolytic solution into the electrode compartment 5 and an electrolytic solution outlet for discharging the electrolytic solution from the electrode compartment 5 at the boundary with the outer frame 3. For example, the anode compartment 5a includes an anode electrolytic solution inlet for introducing the electrolytic solution into the anode compartment 5a and an anode electrolytic solution outlet for discharging the electrolytic solution discharged from the anode compartment 5a. For example, the cathode compartment 5c includes a cathode electrolytic solution inlet for introducing the electrolytic solution into the cathode compartment 5c and a cathode electrolytic solution outlet for discharging the electrolytic solution discharged from the cathode compartment 5c.

An electrode compartment 5 may include a baffle plate 8 for adjusting the gas-liquid ratio inside the bipolar electrolyzer 50. The electrode compartment 5 may also include an internal distributor for evenly distributing the electrolytic solution within the surface of the electrode 2 in the bipolar electrolyzer 50. The electrode compartment 5 may further include a protrusion for forming a Karman vortex to uniformize the concentration of the electrolytic solution and the temperature of the electrolytic solution inside the bipolar electrolyzer 50 and to promote defoaming of the gas adhered to the electrode 2 and the diaphragm 4.

Note that a current collector 2r may be provided not only inside the cathode compartment 5c but also inside the anode compartment 5a. This current collector 2r may be made of the same material and has the same configuration as the current collector provided inside the cathode compartment 5c. It is also possible to make the anode 2a per se function as a current collector.

### - Rectifying plate -

A rectifying plate 6 supports the anode 2a, and is provided between the anode 2a and the partition wall 1. In addition, a rectifying plate 6 supports the cathode 2c and the current collector 2r, and is provided between the current collector 2r and the partition wall 1.

A rectifying plate 6 is attached to the partition wall 1 of one of adjacent electrolytic cells 65, and a structure may be adopted in which, for example, the partition wall 1, the rectifying plate 6, and the anode 2a are superimposed in the anode compartment 5a in this order from left to right. The partition wall 1, the rectifying plate 6, and the anode 2a may be electrically connected and directly connected in a physical manner. The method of directly attaching these components to each other includes welding. As a matter of course, it is possible to adopt a structure in which the partition wall 1, the rectifying plate 6, the current collector 2r, the conductive elastic body 2e, and the anode 2a are superimposed in the anode compartment 5a in this order from left to right.

A rectifying plate 6 is attached to the other partition wall 1 of the adjacent electrolytic cell 65. For example, a structure may be adopted in which the cathode 2c, the conductive elastic body 2e, the current collector 2r, the rectifying plate 6, and the partition wall 1 are superimposed in the cathode compartment 5c in this order from left to right. The cathode 2c, the conductive elastic material 2e, the current collector 2r, the rectifying plate 6, and the partition wall 1 may be electrically connected and directly connected in a physical manner. The method of directly attaching these components to each other includes welding.

Provision of a rectifying plate 6 in an electrolytic compartment 5 facilitates the flow of current from the partition wall 1 to the anode 2a, or from the cathode 2c to the partition wall 1. The rectifying plate 6 in the electrolytic compartment 5 reduces convection currents generated inside the electrolytic compartment 5 due to turbulence of the gas-liquid flows inside the electrolytic compartment 5, thereby suppressing a local increase in the temperature of the electrolytic solution.

A rectifying plate 6 is preferably formed of a conductive metal material. Such materials include, for example, mild steel, stainless steel, and nickel plated with nickel.

It is preferable that at least part of the rectifying plate 6 is conductive, and it is even more preferable that the entire rectifying plate 6 is conductive. The conductivity of the rectifying plate 6 can suppress an increase in voltage of the electrolytic cell 65 caused by deflection of the electrode.

### - Gasket -

The gaskets 7 are provided on the outer frame 3 that borders the partition wall 1. The gaskets 7 function to prevent leakage of the electrolytic solution and generated gases to the outside of the bipolar electrolyzer 50 and mixing of gases between the anode compartment 5a and cathode compartment 5c.

The gaskets 7 have a quadrangular or annular shape obtained by hollowing out the surface of an electrode 2 in conformity with the surface in contact with the outer frame 3. Diaphragms 4 are stacked between adjacent bipolar elements 60 by sandwiching each diaphragm 4 between two gaskets.

The gasket 7 preferably has a slit portion capable of accommodating the diaphragm 4 so that the diaphragm 4 can hold the diaphragm 4. In addition, the gasket 7 is preferably provided with an opening that allows the diaphragm 4 to be exposed on both surfaces of the gasket 7. Because the gasket 7 is provided with the opening, the gasket 7 can accommodate the edge portion of the diaphragm 4 in the slit portion and cover the end faces of the edges of the diaphragm 4. This ensures that leakage of the electrolytic solution and the gases from the edge surface of the edge of the diaphragm 4 can be prevented.

The material of the gasket 7 is not particularly limited, and a known rubber material or resin material, or the like having insulation properties may be selected. Specific examples of such rubber or resin materials include: rubber materials such as natural rubber (NR), styrene butadiene rubber (SBR), chloroprene rubber (CR), butadiene rubber (BR), acrylonitrile-butadiene rubber (NBR), silicone rubber (SR), ethylene-propylene rubber (EPT), ethylene-propylene-diene rubber (EPDM), fluoro rubber (FR), isobutylene-isoprene rubber (IIR), urethane rubber (UR), and chlorosulfonated polyethylene rubber (CSM); fluoro resin materials such as polytetrafluoroethylene (PTFE), tetrafluoroethylene-perfluoroalkyl vinyl ether copolymer (PFA), tetrafluoroethylene-ethylene copolymer (ETFE), or chlorotrifluoroethylene-ethylene copolymer (ECTFE); and resin materials such as polyphenylene sulfide (PPS), polyethylene, polyimide, and polyacetal. Of these, ethylene-propylene-diene rubber (EPDM) and fluoro rubber (FR) are particularly preferably selected from the viewpoint of elastic modulus and alkali resistance.

### - Baffle plate -

The baffle plate 8 is a partition plate that functions to restrict the flow of electrolytic solution inside the electrode compartment 5. The baffle plate 8 adjusts the ratio of the electrolytic solution to the gas inside the electrode compartment 5 to separate the electrolytic solution and the gas so that only the electrolytic solution flows on the back side and the electrolytic solution and the gas on the front side, for example. In other words, the baffle plate 8 allows the electrolytic solution to circulate internally in the electrode compartment 5 by allowing the gas to stagnate in a predetermined location, making the concentration of the electrolytic solution more uniform.

The baffle plate 8 is provided inside the cathode compartment 5c, for example. The baffle plate 8 is preferably disposed obliquely relative to or parallel to the partition 1 along the lateral direction of the cathode chamber 5c between the cathode 2c and the partition 1. In the space near the cathode 2c, which is partitioned by the baffle plate 8, the concentration of the electrolytic solution decreases and hydrogen is generated as the electrolysis of water proceeds. This may cause a difference in specific gravities of the gas and the liquid. By disposing the baffle plate 8 inside the cathode compartment 5c, the internal circulation of the electrolytic solution in the cathode compartment 5c is promoted and the distribution of the concentration of the electrolytic solution in the cathode compartment 5c is made to be more uniform.

Although one example configuration of a bipolar electrolyzer 50 has been described, the configuration of the bipolar electrolyzer 50 is not limited to the one described above. In addition to the elements described above, the bipolar electrolyzer 50 may include, for example, a header for distributing or collecting the electrolytic solution.

### <Method of operating alkaline water electrolysis system>

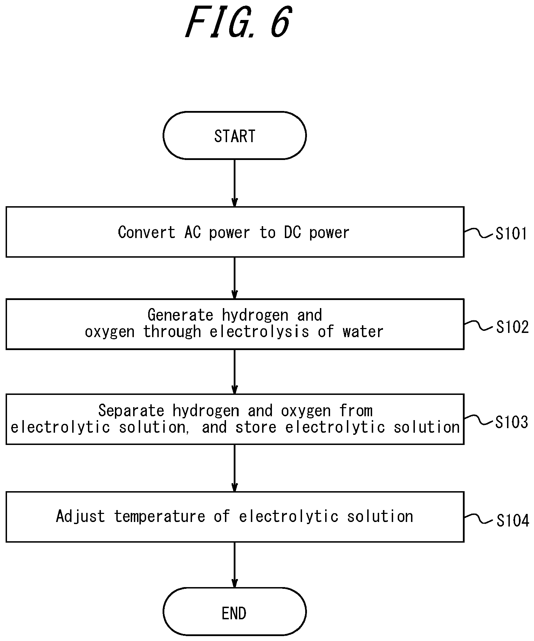

Referring to FIG. 6, one example of a method of operating the alkaline water electrolysis system 70 is operated will be described.

In Step S101, when fluctuating power is supplied from outside the alkaline water electrolysis system 70, the plurality of rectifiers 74_1 to 74_N convert AC power to DC power. The plurality of rectifiers 74_1 to 74_N apply a predetermined DC voltage across anode terminals and cathode terminals in the plurality of bipolar electrolyzers 50_1 to 50_N.

In Step S102, the plurality of bipolar electrolyzers 50_1 to 50_N generate oxygen from the anode side and hydrogen from the cathode side through electrolysis of water using the electrolytic solution based on the predetermined DC voltage applied from the plurality of rectifiers 74_1 to 74_N. Each of the bipolar electrolyzers 50 is controlled to be operated or stopped by the control unit 30.

In Step S103, the oxygen separation tank 72o separates oxygen from the mixture of oxygen and the electrolytic solution that flows in from the bipolar electrolyzers 50. The separated oxygen is discharged from an outlet provided at the upper portion of the oxygen separation tank 72o. The separated electrolytic solution is stored inside the oxygen separation tank 72o. In addition, the hydrogen separation tank 72h separates hydrogen from the mixture of hydrogen and the electrolytic solution that flows in from the bipolar electrolyzers 50. The separated hydrogen is discharged from an outlet provided at the upper portion of the hydrogen separation tank 72h. The separated electrolytic solution is stored inside the hydrogen separation tank 72h.

In Step S104, the heat exchanger 79o adjusts the electrolytic solution stored inside the oxygen separation tank 72o to an appropriate temperature. In addition, the heat exchanger 79h adjusts the electrolytic solution stored inside the hydrogen separation tank 72h to an appropriate temperature.

According to the method of operating the alkaline water electrolysis system 70 according to the present embodiment, the concentration of impurities can be maintained extremely low in all of the bipolar electrolyzers 50 in the entire system 70 even when the current load is reduced. This reduces the frequency of purging of an inert gas associated with shutdown of the entire system and improves the sustainability of supply of high-purity hydrogen. Accordingly, by adopting the method of operating the alkaline water electrolysis system 70 according to the present embodiment, high-purity hydrogen can be continuously produced.

Although the above embodiment has been described as a typical example, it is apparent to those skilled in the art that many modifications and substitutions can be made within the gist and scope of the present disclosure. Accordingly, the present disclosure should not be interpreted to be limited to the embodiment described above, and various variations and modifications can be made without departing from the scope of the claims. For example, it is possible to combine multiple element blocks described in the configuration diagrams of the disclosure into one, or one multiple element may be divided. In addition, it is also possible to combine several steps described in the flowchart of the embodiment into one, or one step may be divided.

### INDUSTRIAL APPLICABILITY

According to the present disclosure, an alkaline water electrolysis system that is capable of continuously producing high-purity hydrogen is achieved. This is particularly useful in the fields of petroleum refining, chemical synthesis, and metal refining, as well as in applications such as hydrogen stations for fuel cell vehicles, smart communities, and hydrogen power plants.

### REFERENCE SIGNS LIST

- 1: Partition wall
- 2: Electrode
- 2a: Anode
- 2c: Cathode
- 2e: Conductive elastic body
- 2r: Current collector
- 3: Outer frame
- 4: Diaphragm
- 5: Electrode compartment
- 5a: Anode compartment
- 5c: Cathode compartment
- 6: Rectifying plate
- 6a: Anode rectifying plate
- 6c: Cathode rectifying plate
- 7: Gasket
- 8: Baffle plate
- 30: Control unit
- 50: Bipolar electrolyzer
- 51g1: Fast head
- 51g2: Loose head
- 5111: Insulating plate
- 51i2: Insulating plate
- 51a: Anode terminal element
- 51c: Cathode terminal element
- 51r: Tie rod
- 60: Bipolar element
- 61: Temperature control valve
- 61o: Temperature control valve
- 61h: Temperature control valve
- 62: shut-off valve
- 62o: shut-off valve
- 62h: shut-off valve
- 62oi: Inlet open/close valve
- 62hi: Inlet open/close valve
- 62oo: Outlet open/close valve
- 62ho: Outlet open/close valve
- 65: Electrolytic cell
- 70: Alkaline water electrolysis system
- 70B: Alkaline water electrolysis system
- 72: Gas-liquid separation tank
- 72o: Oxygen separation tank
- 72h: Hydrogen separation tank
- 74: Rectifier
- 78: Pressure gauge
- 78o: Pressure gauge
- 78h: Pressure gauge
- 79: Heat exchanger
- 79o: Heat exchanger
- 79h: Heat exchanger
- 80: Pressure control valve
- 80o: Pressure control valve
- 80h: Pressure control valve
- 90: Circulation pump

## Claims

1. An alkaline water electrolysis system comprising:
a rectifier that is connected to a fluctuating power source and converts an AC power to a DC power;
a plurality of bipolar electrolyzers that generate hydrogen and oxygen through electrolysis of water using an electrolytic solution based on a predetermined DC voltage supplied from the rectifier;
gas-liquid separation tanks that are connected to the plurality of bipolar electrolyzers, and separate the hydrogen and the oxygen from the electrolytic solution and store the electrolytic solution; and
open/close valves provided between the gas-liquid separation tanks and the bipolar electrolyzers.

2. The alkaline water electrolysis system according to claim 1, further comprising
pressure control valves that adjust internal pressures of the gas-liquid separation tanks.

3. The alkaline water alkaline water electrolysis system according to claim 1 or 2, further comprising
a control unit that determines the DC voltage and controls the bipolar electrolyzers to be operated or stopped.

4. The alkaline water electrolysis system according to claim 3, wherein
the control unit
controls the bipolar electrolyzers to be operated or stopped so that a current to operate the alkaline water electrolysis system coincides with a target current.

5. The alkaline water electrolysis system according to claim 3, wherein
the control unit
controls the bipolar electrolyzers to be operated or stopped based on a ratio of a current density of operating bipolar electrolyzers to a maximum current density.

6. The alkaline water electrolysis system according to claim 3, wherein
the control unit:
operates all of the bipolar electrolyzers when a power supplied to the alkaline water electrolysis system is equal to or more than a first threshold, and
operates a part of the bipolar electrolyzers when the power supplied to the alkaline water electrolysis system is less than the first threshold.

7. The alkaline water electrolysis system according to claim 3, wherein
the control unit,
when the power is supplied to the alkaline water electrolysis system:
increases a number of bipolar electrolyzers being operated when a current density of a bipolar electrolyzer that has started operating is equal to or more than a second threshold, and
maintains the number of the bipolar electrolyzers being operated when the current density of the bipolar electrolyzer that has started operating is less than the second threshold.

8. The alkaline water electrolysis system according to any one of claims 1 to 7, further comprising
a heating device that heats the electrolytic solution stored inside the gas-liquid separation tanks.

9. The alkaline water electrolysis system according to any one of claims 1 to 8, wherein
renewable energy supplied to the alkaline water electrolysis system is an energy derived from at least one of winds, solar light, hydraulic energy, tides, waves, ocean currents, and heat of the earth.

10. The alkaline water electrolysis system according to claim 1, wherein
the rectifier is provided to each of the plurality of bipolar electrolyzers.

11. A method of operating an alkaline water electrolysis system comprising the steps of:
converting an AC power to a DC power by a rectifier connected to a fluctuating power source;
generating, by a plurality of bipolar electrolyzers, hydrogen and oxygen through electrolysis of water using an electrolytic solution based on a predetermined DC voltage supplied from the rectifier;
separating the hydrogen and the oxygen from the electrolytic solution and storing the electrolytic solution in gas-liquid separation tanks connected to the plurality of bipolar electrolyzers; and
inhibiting, by open/close valves provided between the gas-liquid separation tanks and the bipolar electrolyzers, passages of the electrolytic solution, the hydrogen, and the oxygen between the gas-liquid separation tanks and the bipolar electrolyzers.

12. The method of operating an alkaline water electrolysis system according to claim 11, further comprising,
by a control unit, the step of controlling the bipolar electrolyzers to be operated or stopped and closing an inlet open/close valve in the open/close valves and an outlet open/close valve in the open/close valves or the steps of closing one of the inlet open/close valve or the outlet open/close valve.

13. The method of operating an alkaline water electrolysis system according to claim 12, further comprising,
by the control unit, the step of closing the inlet open/close valve and the outlet open/close valve, or closing one of the inlet open/close valve or the outlet open/close valve, when an inside of a bipolar electrolyzer is filled with the electrolytic solution.

14. The method of operating an electrolysis apparatus according to any one of claims 11 to 13, further comprising
the step of adjusting a temperature of the electrolytic solution by a heat exchanger provided inside the gas-liquid separation tanks.

15. The method of operating an electrolysis apparatus according to any one of claims 11 to 14, wherein
the gas-liquid separation tanks are provided at an upper portion of the plurality of the bipolar electrolyzers.
